# EUROPEAN PATENT APPLICATION

(11) **EP 2 244 112 A1**
(43) Date of publication of application: **27.10.2010**
(21) Application number: 09275026.4
(22) Date of filing: 20.04.2009
(51) Int. Cl.: G02B 6/00

(54) **Improvements in optical waveguides**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

An optical waveguide comprising a body of material configured for the contained propagation of light therethrough, a surface relief grating configured to receive the propagating light and at least partially to diffract or reflect it out of the waveguide, and at least one conforming layer of dielectric material of varying thickness on a profiled surface of the grating so that the grating exhibits a spatial variation in efficiency.

## Description

This invention relates to optical waveguides, particularly but not exclusively for use in waveguide-based imaging systems, such as for example head-up displays, head-mounted displays, helmet mounted displays and other projection displays.

Our earlier specification W02007/029034 describes a waveguide-based imaging system, and the disclosure of that specification is included herein by reference.

We have found that systems embodying the invention of '034 can benefit from the use of an image (light) injection grating having high angular bandwidth and high reflective efficiency. One aspect of the present invention can in its preferred embodiments provide a waveguide having such an injection grating.

Thus in that aspect the invention provides an optical waveguide comprising a surface relief grating having a profiled reflecting surface and at least one layer of dielectric material conforming to the reflecting surface, the waveguide being operable such that light passes through the dielectric material to the reflecting surface.

This aspect of the invention also provides the use, for the purpose of controlling the efficiency and/or angular bandwidth of a reflecting surface relief grating of an optical waveguide, of at least one layer of dielectric material conforming to a reflecting profiled surface of the grating, the waveguide being operable such that light passes through the dielectric material to the reflecting profiled surface. The term layer or coating as used herein in connection with the dielectric material means a layer of coating having a thickness substantially less than the wavelength of the visible light, for which it is to be used, for example in the range 5 to 250µm, and preferably 15 to 70µm.

The at least one layer of dielectric material may comprise one or more of silicon dioxide, aluminium oxide or titanium dioxide. Preferably it is titanium dioxide. The thickness of the at least one dielectric layer may be selected to control the efficiency and/or angular bandwidth of the grating.

The waveguide may comprise a profiled waveguide surface, the at least one dielectric layer being disposed on the profiled waveguide surface so as to reproduce the profile thereof, the profiled reflective surface of the grating being a surface of a layer of material disposed on the at least one dielectric layer and conforming thereto.

In an alternative embodiment, the profiled reflecting surface may be a reflective surface of a substrate which is conformably coated with the at least one dielectric layer and is optically contacted to a surface of the waveguide.

The reflective surface may be a surface of a metallic or other material having a complex refractive index.

We have found that alternatively or in addition to being used for injecting light into the rod-like wave guide of '034, or other waveguides, a dielectric layer conforming to the profiled surface of a surface relief grating may also be used to advantage in the extraction of light from a waveguide. For example it may be used in the invention of '034 in the extraction of light from a rod-like waveguide for supply to a plate waveguide and/or in the plate waveguide itself. In each case the dielectric layer can be used to control the efficiency of the grating.

This aspect of the invention thus provides an optical waveguide comprising a body of material configured for the contained propagation of light therethrough, a surface relief grating within configured to receive the propagating light and at least partially to diffract or reflect it out of the waveguide, and at least one conforming layer of dielectric material of varying thickness on a profiled surface of the grating so that the grating exhibits a spatial variation in efficiency.

This aspect of the invention also provides the use for the purpose of controlling the efficiency of a surface relief grating of an optical waveguide of at least one layer of dielectric material conforming to a profiled surface of the grating. By "efficiency" we mean reflective or transmissive efficiency, depending on whether the grating is a reflection or transmission grating.

In these aspects the grating preferably is a low-efficiency grating of high bandwidth, having a relatively low efficiency at the diffraction or reflection order of interest, the majority of the incident light remaining undiffracted in the zeroth order so as to continue to propagate within the waveguide.

The grating may extend longitudinally of the waveguide, the efficiency of the grating varying longitudinally of the waveguide.

This can enable the efficiency of the grating to be increased along the length of the waveguide, to compensate for the increasing attenuation of the transmitted light with distance along the waveguide.

The variation of efficiency of the grating may be such that for uniform input light to the waveguide the intensity of the light passing out of the waveguide is substantially constant along the grating in the direction of propagation.

As noted, the invention may be applied to plate waveguides as well as those of elongate form. Such a plate waveguide may be used in conjunction with a waveguide as set forth above. The spatial efficiency of the grating of the plate waveguide may be such that for light of uniform intensity injected into the first-mentioned waveguide, an image formed by the plate waveguide is of substantially uniform intensity.

The surface relief grating of the plate waveguide may extend longitudinally and transversely of the direction of propagation, the thickness of the at least one layer varying in both the longitudinal and transverse directions. Thus the thickness of the at least one layer may increase in both the longitudinal and transverse directions so that the efficiency of the grating increases from one corner thereof to an opposite corner. Thereby the plate waveguide may be used to compensate for the attenuation suffered by light diffracted out of a conventional rod-like waveguide at different points along its length. Specifically the plate waveguide may be used in combination with a further waveguide arranged to inject light into the plate at locations distributed along a transverse extent thereof, the variations in thickness of the at least one layer being such that the consequent spatial variation of the efficiency of the plate waveguide grating compensates for variations in the intensity of the light injected by the further waveguide.

The exit gratings of known waveguides are surface relief structures on the surface of the waveguide. We have found that as such a structure is vulnerable to the external environment, and needs a further cover piece (which does not optically contact the waveguide) to protect it. This can be inconvenient when integrating the waveguide into the design of other apparatus, and can add to the cost of the product.

Thus the grating preferably is embedded within the material of the waveguide.

The grating may be disposed at an interface between two portions of the waveguide body material.

In particular, it may be disposed on a surface of a said portion at said interface.

The waveguide may comprise two external surfaces disposed parallel to the direction of propagation so as in operation to contain the propagating light, the grating extending parallel to the external surfaces.

The waveguide may comprise a beam splitter for directing propagating light towards both of said external surfaces.

Preferably, the position of the beam splitter transversely of the propagation direction relative to the external surface is selected so as to optimise the uniformity of a display formed by light diffracted or reflected out of the waveguide. The independent aspects of the invention set out above can be used singly or in any combination. Furthermore, the optional or preferred features set out above may be utilised in any operative combination with any aspect of the invention. In particular (but without limitation) a feature hereafter appearing in a subordinate claim dependent from an independent claim to one aspect of the invention may be incorporated in a claim to another aspect of the invention. All subordinate claims are deemed repeated in this introduction to the specification as consistory clauses, to the extent that they do not already appear above.

The invention will be described, by way of example only, with reference to the accompanying drawings, wherein:
Figure 1 shows a waveguide according to the invention;
Figure 2 shows part of the structure of Figure 1;
Figure 3 shows an alternative form of the structure of Figure 2;
Figure 4(a) shows a prior art structure;
Figure 4(b) shows an enlarged view of part of the structure of Figure 2;
Figure 5 shows the relative performance of the structures of Figures 4(a) and 4(b);
Figure 6 shows a further part of the structure of Figure 1;
Figure 7 shows an enlarged view of part of the structure of Figure 6,
Figure 8 shows the performance of two versions of the structure of Figure 6,
Figure 9 shows part of the embodiment of Figure 1 in greater detail, and
Figure 10 shows another embodiment of the invention.

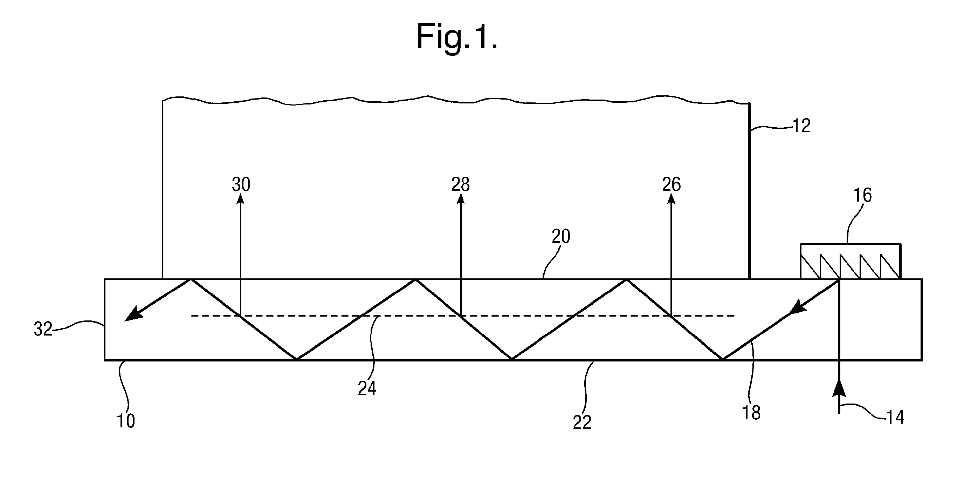

Referring to Figure 1, a projection display suitable for use in a head-up display comprises a rod-like waveguide 10 of glass or transparent plastics material. The waveguide 10 is of square or rectangular cross-section and is placed in close proximity to a plate waveguide 12 in which in operation the display is formed as explained in our '034 specification. Collimated image bearing light 14 exits collimation optics (not shown), and is incident on an input reflection grating 16 which is disposed on a rear surface 20 of the waveguide 10. The collimated light has rays at range of angles relative to the collimation axis which determines the field of view of the system. The reflection grating diffracts the incident rays at angles such that all of them are totally internally reflected when incident on the four surfaces of the waveguide 10; two of the surfaces 20 and 22 are shown in Figure 1. The rays (a typical one of which is shown at 18) thus are contained within the waveguide 10 between its parallel opposite surfaces, and propagate down the length of the waveguide 10.

The propagating rays are incident repeatedly on a low efficiency grating 24, each time a proportion 26, 28, 30 of the incident light being diffracted out of the waveguide 10 into the plate waveguide 12. The remainder of the light passes through the grating and ultimately is absorbed at the end 32 of the waveguide 10. The end 32 of the waveguide 10 is coated or painted with a suitably absorbtive material. The distributed partial diffraction of the light into the plate waveguide 12 results in expansion of the image in the plate waveguide across its width parallel to the extent of the waveguide 10.

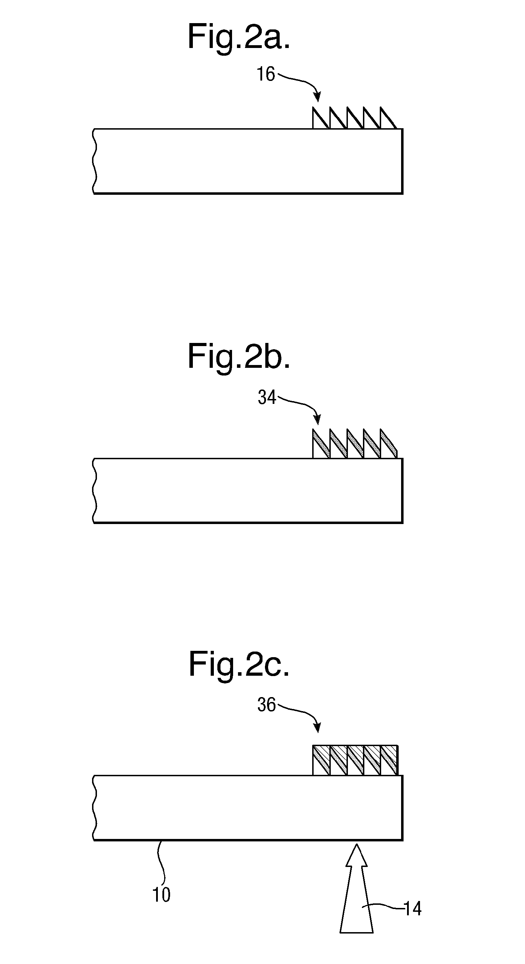

Figure 2 shows the input grating 16 in more detail. The grating (here shown enlarged for clarity in Figure 2(a)) is etched onto the surface 20 of the waveguide 10, or is replicated on to it using a UV-curable polymer. Here the grating is a periodic sawtooth profile. One or more layers 34 of dielectric material (Figure 2(b)) are applied conformably to the surface of the grating, and a conforming metallic reflecting layer 36 (Figure 2 (c)) is applied to the rear surface of the dielectric layer 34. The metallic reflecting layer 36 may be silver, gold, aluminium or another material having a complex refractive index. Preferably it is silver.

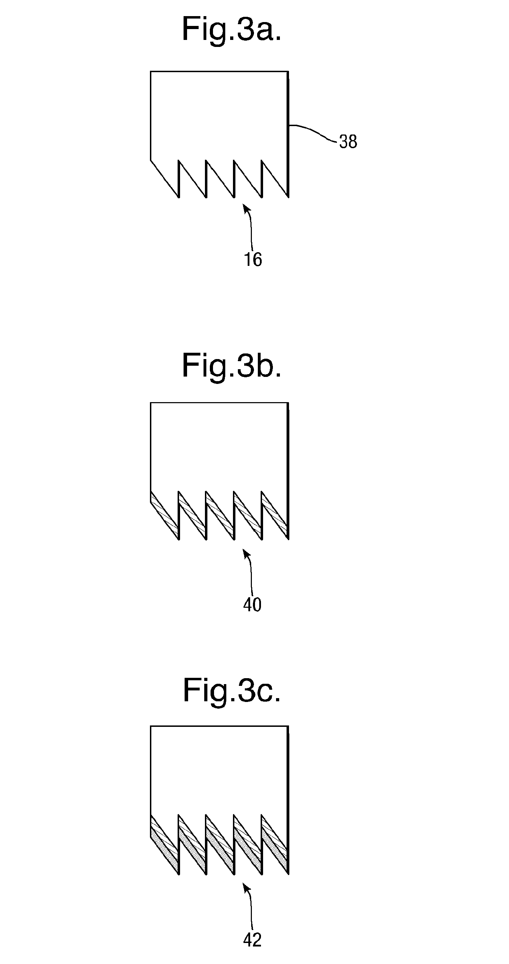

Figure 3 shows an alternative form of the injection grating 16. The grating is either etched or replicated onto a substrate 38 using a UV-curable polymer (Figure 3(a)). A conformal metallic layer 40 of constant thickness is applied to the grating, and is overlaid by one or more layers 42 of dielectric material. The material of the layers 40, 42 and their thicknesses are chosen according to the same criteria as far the Figure 2 embodiment. The grating 16 is then glued to the surface 20 of the waveguide 10 by means of optical cement. It is not essential that the cement has exactly the same refractive index as the material of the waveguide 10. For example, for waveguide material of n ≈ 1.5, cement having 1.5 ≤n≤ 1.6 would be suitable.

A specific example will now be described to demonstrate the improvement which can be obtained in angular bandwidth and efficiency with the use of a grating according to this aspect of the invention. Although the example uses the rod-like waveguide 10, the invention is of course applicable to other waveguides to or from which light is to be injected or extracted.

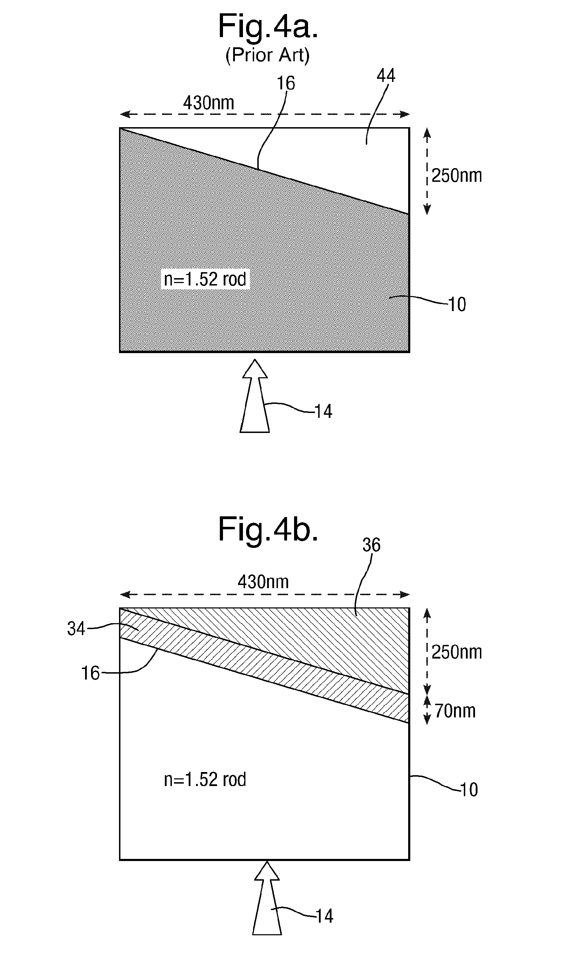

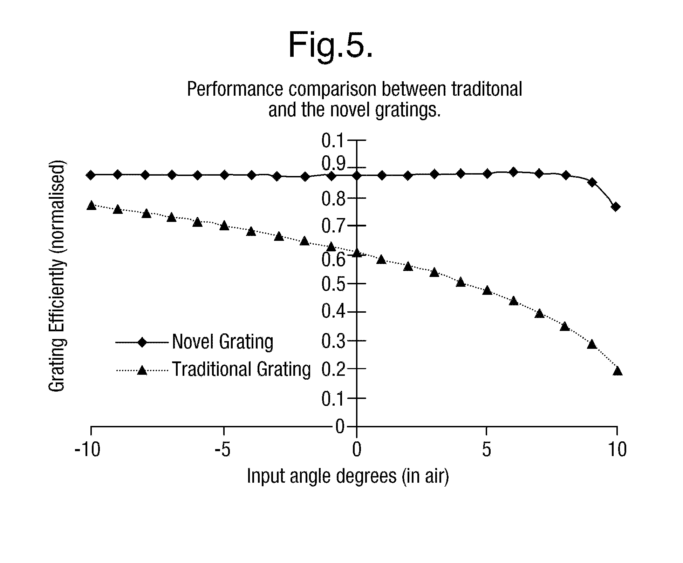

A collimated-image bearing beam 14 with a 20° field of view (angular bandwidth) is required to be injected from air into the waveguide 10, which is of material having a refractive index n=1.52. A sawtooth type grating 16 with period 430nm and height 250nm is etched or replicated onto the surface 20 of the waveguide 10. Conventionally, a thick layer (approximately 100nm) of silver 44 would be coated onto the surface of the grating, as shown in Figure 4(a). Figure 5 shows the reflective efficiency of this conventional grating in the +1 diffraction order (dashed line) for input ray angles ranging from -10° to +10° relative to the collimation axis, for light of wavelength 532nm.

In a grating according to the invention (Figure 4(b)) a conformal layer 34 of titanium dioxide approximately 70nm thick is first applied to the grating 16. A layer 36 of silver approximately 100nm thick is then overlaid onto the layer 34. The efficiency of this grating under the same conditions as for the grating of Figure 4(a) also is shown in Figure 5 (solid line). It is evident that the efficiency and the bandwidth of the grating is substantially improved compared to that of Figure 4(a).

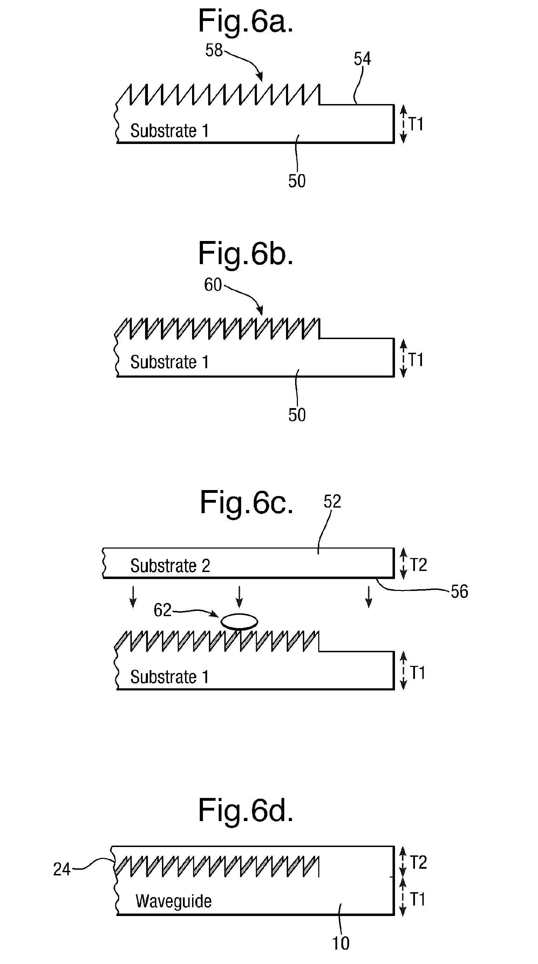

Figure 6 shows the embedded exit grating 24 in more detail. The waveguide 10 comprises lower and upper substrates 50, 52, of respective thickness T1 and T2, and having abutting surfaces 54, 56. The lower substrate 50 has on its upper surface 54 a surface relief grating 58 (here of a sawtooth profile, shown much enlarged in Figure 6(a)), produced by etching or replicating as already described for grating 16. A conformal dielectric coating or layer 60 (Figure 6(b)) is applied to the grating in a thickness which increases in the direction of propagation of the light along the waveguide 10 (right to left in Figure 6). The substrate 52 is laid onto the lower substrate 50 and cemented thereto by optical cement 62 (Figure 6(c)) along its whole length so as to be optically continuous therewith. The choice of the refractive index of the cement will depend on the range of angles in the propagating light rays within the waveguide, the refractive index of the substrates 50, 52 the refractive index of the replication material and the refractive indices of the range of available optical cements with suitable optical properties. These choices are made when the waveguide based display is being designed. In the example described here, with substrates 50, 52 having a refractive index n ≈ 1.5, it is normally sufficient to use optical cement having n between about 1.5 and 1.6.

The thickness of the coating is chosen to increase the efficiency of the grating along the waveguide to compensate for the progressive attenuation of the light as it is propagated along the waveguide. Ideally the increase in thickness of the layer 60 is such as fully to compensate for the attenuation, so that the intensity of the light diffracted transversely out of the waveguide from longitudinally separated points along the grating is equal. In practice, the increase in thickness of the layer 60 is such as to compensate for the attenuation within acceptable limits, so that the intensity of the light diffracted transversely out of the waveguide from longitudinally separated points along the grating is approximately equal.

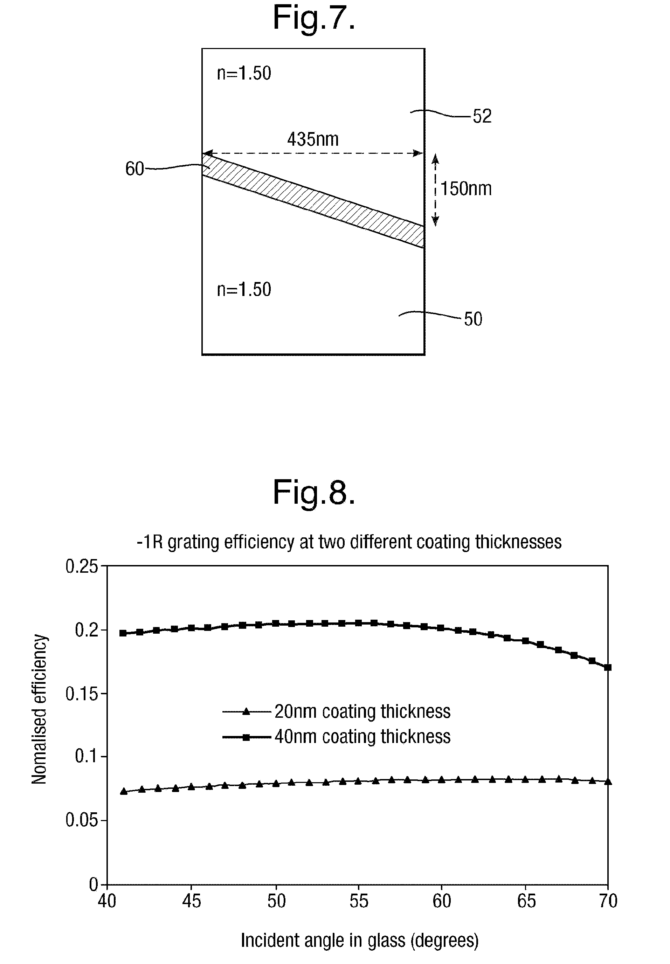

Figure 7 shows one tooth of the sawtooth grating 24. The grating has a period of 435nm and a height of 150nm. In one prototype, the titanium dioxide layer 60 was made 20nm thick. In another, it was made 40nm thick. In each prototype the substrates 50, 52 and the optical cement 62 had a refractive index n of approximately 1.5.

Figure 8 shows the performance of the two prototypes with incident rays of wavelength 532nm propagating within the waveguide 10. The lower line in the graph shows the performance of the grating with the 20nm titanium dioxide coating, and the upper line the performance of the grating with the 40nm coating. In both cases the rays are incident on the waveguide at from 40° to 72°. The average efficiency of the grating with the 20nm coating is approximately 7.5%, for the other grating the efficiency is about 20% for angles of incidence between 40° and 62°, and falls away slightly above that range. The average however is about 19% for angle of incidence between 40° and 72°. Hence by increasing the thickness of the dielectric layer 60 along the length of the waveguide, the intensity of the diffracted output rays 26, 28, 30 can be equalised, and a more even brightness can be obtained in the display in the plate waveguide 12. Another advantage which may be obtained is the more efficient utilisation of light, and hence a reduction in total intensity of the collimated light input 14 required to achieve a given brightness in the display in the waveguide 12.

The graduated thickness of the layer 60 can be achieved by interposing a suitably shaped mask between the substrate 50 as the source in the coating chamber used to deposit the titanium dioxide material. Alternatively a moveable baffle may be used; moving it continuously at a controlled speed can enable the coating thickness on the grating to be varied in a controlled manner.

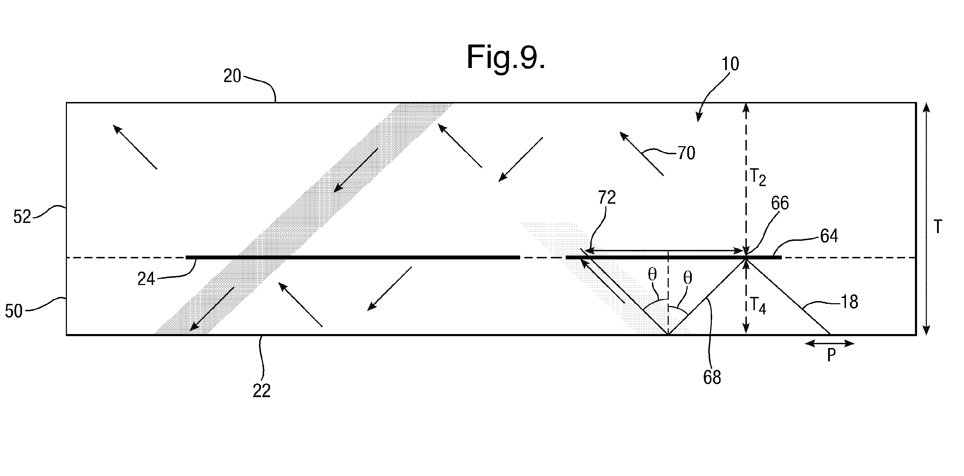

Although not shown in Figure 1 for simplicity, the waveguide 10 contains one or more beam-splitters 64, Figure 9 which are coplanar with the grating 24 and on which the beam 18 is incident before it arrives at the grating. The beam-splitters 64 are one or more semi-reflecting surfaces disposed substantially parallel to the waveguide surfaces 20, 22. We have found that the relative dimensions T₁, T₂ (the thickness of the two substrates 50, 52 where T₁ + T₂ = T, the total thickness of the waveguide) can be chosen further to increase the uniformity of the image being diffracted out of the waveguide 10 by the grating 24. By uniformity we mean the lack of variation in the intensity of the output image, assuming that the intensity of the input image is itself uniform.

At each interaction e.g. 66 of any impinging image-bearing beam 18 with a beam splitter, it is divided into two parts 68, 70 one passing undeflected through the beam splitter, the other being reflected.

Considering just the reflected part 68 of the beam, this beam 68 totally internally reflects off the wall 22 of the waveguide and impinges again on the beam splitter at 72 a distance (S) downstream of the previous impingement 66. Assuming that the beam 18 and its sub-parts each have a beam width (pupil) P in the propagation direction, it is necessary for S≤P if there are to be no gaps between adjacent pupils in the image produced by the grating 10.

Thus, with reference to Figure 9,

S/2T₁ = tan θ

and S = 2T₁ tan θ

Normally P is chosen so that P=2T.

In the limited case of adjacent pupils just touching, S=P, and for total internal reflection θ = at least 72, assuming n=1.5.

Then

tan θ = 3.08 and 2T = 6.16T

And thus the maximum value of T₁ is approximately ⅓ T or ½ T₂

Slightly different ratios of T₁ to T₂ will be obtained for different values of the refractive index n of the waveguide material. It will be appreciated that the dimensions T₁ and T₂ can be interchanged; indeed in Figure 6 T₁ is shown as the larger of the two dimensions. For convenience in manufacture it is preferable that the beam splitter 64 is coplanar with the grating.

The plate waveguide 12 may also have a surface relief grating according to the invention embedded in it which forms a two dimensional image from the image-bearing beams 26, 28, 30 from the waveguide 10. The grating thus may be of similar construction to that shown in Figure 6 with a conforming dielectric layer or existing applied to its profiled surface, and increasing in thickness with distance away from the interface of the waveguide 10 and 12. Then the efficiency of the grating increases with distance away from the interface, thereby compensating for the attenuation suffered by the injected beams 26, 28, 30 as they progress through the waveguide 12.

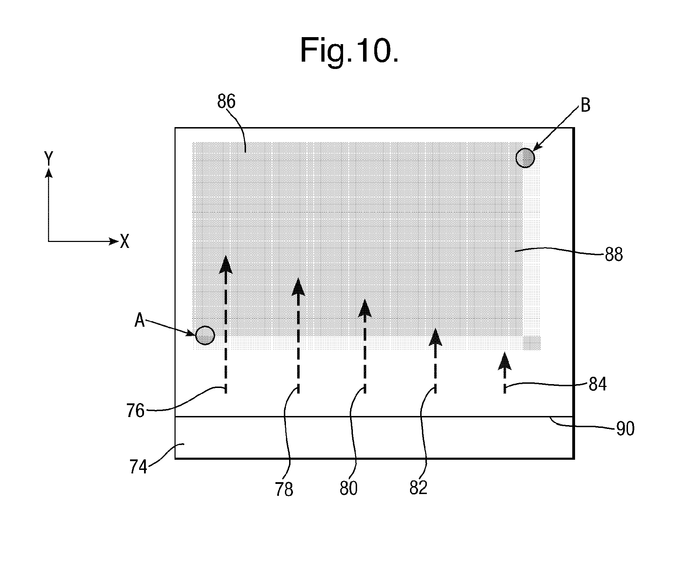

Figure 10 shows a plate waveguide for use with a conventional rod-like waveguide which does not have a variable efficiency grating according to the invention. Beams 76, 78, 80, 82, 84 are diffracted out of a rod-like waveguide 74 by a conventional constant-efficiency grating from an injected beam propagating from left to right in Figure 10. Because of progressive attenuation down the waveguide 74, the beams 76-84 have relative intensities proportional to the lengths of the illustrated vectors. The beams enter a plate waveguide 86 wherein a two dimensional image is formed by a surface relief grating 88. This grating has a dielectric coating or layer on its profiled surface similar to that described with reference to Figure 6, except that the coating varies in thickness in two dimensions. Thus, the thickness and the coating efficiency increase in the y direction away from the interface 90 with the waveguide 74 to compensate for attenuation in the waveguide 86; furthermore, the thickness and the grating also increase in the x direction away from the left-hand edge of the waveguide 90 to compensate for the attenuation in the waveguide 74. As a result the grating efficiency increases diagonally across the grating from a minimum at the corner A of the grating, to a maximum at corner B. This can materially assist in overcoming the fault often seen in prior art apparatus of this type where for an evenly-illuminated image injected into the waveguide 74, the resulting display in the plate waveguide 90 is noticeably darker at point B than at point A.

In summary, this specification discloses the use, for the purpose of controlling the reflective or diffractive efficiency and/or angular bandwidth of a surface relief grating of an optical waveguide, of at least one layer or coating of dielectric material conforming to a profiled surface of the grating. The waveguide is operable such that light passes through the dielectric material to the profiled surface. The grating may be a reflection or transmission grating. In a transmission grating, the coating may vary in thickness so as to provide a grating having a spatial variation in efficiency.

## Claims

1. An optical waveguide comprising a body of material configured for the contained propagation of light therethrough, a surface relief grating configured to receive the propagating light and at least partially to diffract or reflect it out of the waveguide, and at least one conforming layer of dielectric material of varying thickness on a profiled surface of the grating so that the grating exhibits a spatial variation in efficiency.

2. The waveguide of claim 1 wherein the grating is embedded within the material of the waveguide.

3. The waveguide of claim 1 or claim 2 wherein the grating is disposed at an interface between two portions of the waveguide body material, on a surface of a said portion at said interface.

4. The waveguide of any preceding claim comprising two external surfaces disposed parallel to the direction of propagation so as in operation to contain the propagating light, the grating extending parallel to the external surfaces, a beam splitter for directing propagating light towards both of said external surfaces.

5. The waveguide of claim 4 wherein the grating is configured to receive propagating light at a plurality of locations along the waveguide in the direction of propagation, the position of the beam splitter transversely of the propagation direction relative to the external surfaces being selected so as to optimise the uniformity of a display of an image formed by light diffracted or reflected out of the waveguide.

6. The waveguide of any preceding claim wherein the efficiency of the grating varies along its length in the direction of propagation.

7. The waveguide of claim 6 wherein the efficiency varies such that for uniform input light to the waveguide the intensity of outgoing light is substantially constant along the grating in the direction of propagation.

8. The waveguide of any preceding claim in combination with a plate waveguide into which the light leaving the first-mentioned waveguide is directed to form a display.

9. The waveguide of claim 8 wherein the plate waveguide also is as claimed in any of claims 1 to 7.

10. The waveguide as in claim 9 wherein the plate waveguide is as in claim 7 whereby for light of uniform intensity injected into the first-mentioned waveguide, an image formed by the plate waveguide is of substantially uniform intensity.

11. The waveguide of any of claims 1 to 7 wherein the surface relief grating extends longitudinally and transversely of the direction of propagation, the thickness of the at least one layer varying in both the longitudinal and transverse directions.

12. The waveguide of claim 11 wherein the thickness of the at least one layer increases in both the longitudinal and transverse directions so that the efficiency of the grating increases from one corner thereof to an opposite corner.

13. The waveguide of claim 11 or 12 being a plate waveguide, and in combination with a further waveguide arranged to inject light into the plate at locations distributed along a transverse extent thereof, the variations in thickness of the at least one layer, being such that the consequent spatial variation of the efficiency of the plate waveguide grating compensates for variations in the intensity of the light injected by the further waveguide.

14. The waveguide of any preceding claim wherein the dielectric layer comprises one or more of silicon aluminium oxide or titanium dioxide.

15. The use, for the purpose of controlling the efficiency of a surface relief grating of an optical waveguide, of at least one layer of dielectric material conforming to a profiled surface of the grating.

16. A head-mounted display, a head-up display, a helmet-mounted display or other projection display comprising the waveguide of any of claims 1 to 14 or comprising an optical waveguide in which a dielectric layer is used as in claim 15.
